# EUROPEAN PATENT APPLICATION

(11) **EP 4 395 046 A1**
(43) Date of publication of application: **03.07.2024**
(21) Application number: 22909395.0
(22) Date of filing: 14.09.2022
(51) Int. Cl.: H01M 50/531, H01M 50/533, H01M 50/103

(54) **BATTERY UNIT, BATTERY MODULE, AND VEHICLE**

(30) Priority: 21.12.2021 CN 202123237116 U
(71) Applicant: BYD Company Limited, Shenzhen, Guangdong 518118 (CN)
(72) Inventor: YUAN, Wansong, Shenzhen, Guangdong 518118 (CN); WANG, Xinyue, Shenzhen, Guangdong 518118 (CN); DUAN, Pingan, Shenzhen, Guangdong 518118 (CN); WEN, Aipeng, Shenzhen, Guangdong 518118 (CN)
(74) Representative: Dehns Germany Partnerschaft mbB
(86) International application number: PCT/CN2022/118762
(87) International publication number: WO 2023/116077

(57) **Abstract**

A battery unit, a battery module, and a vehicle are provided. The battery unit includes a housing, an electrode core, a first electrode terminal, and a second electrode terminal. A chamber is defined in the housing. The electrode core is arranged in the chamber, the electrode core includes a first electrode tab and a second electrode tab, one of the first electrode tab and the second electrode tab is a positive electrode tab, the other one of the first electrode tab and the second electrode tab is a negative electrode tab, the positive electrode tab is physically and electrically connected to the housing, and each of an end of the first electrode tab and/or an end of the second electrode tab away from the electrode core includes multiple connection pieces spaced apart. The first electrode terminal is electrically connected to the first electrode tab. The second electrode terminal is electrically connected to the second electrode tab.

## Description

### CROSS-REFERENCE TO RELATED APPLICATIONS

The present disclosure claims priority to Chinese Patent Application No. 202123237116.1, filed on December 21, 2021 and entitled "BATTERY UNIT, BATTERY MODULE, AND VEHICLE". The entire content of the above-referenced application is incorporated herein by reference.

### FIELD

The present disclosure relates to the field of battery technologies, and more specifically, to a battery unit, a battery module to which the battery unit is applied, and a vehicle that includes the battery module.

### BACKGROUND

A battery usually includes an aluminum shell and a battery core installed inside the aluminum shell. The aluminum shell is typically not electrified. As a reaction occurs inside the battery, lithium reacts with the aluminum shell during the reaction, and lithium ions are embedded into the aluminum shell to form an aluminum-lithium alloy, which corrodes the aluminum shell, and affects a service life of the battery.

In addition, in the related art, a positive electrode tab and a negative electrode tab each are usually designed as an integral structure, the positive electrode tab and the negative electrode tab are respectively arranged along two short axes opposite to each other, a current is conducted from a positive cover plate in the related art to an electrode terminal cover plate through an entire aluminum shell, and in this case, a direct current resistance includes a resistance of the aluminum shell. In addition, impedance of the positive electrode tab and the negative electrode tab is also large.

### SUMMARY

According to an objective of the present disclosure, a battery unit is provided, and includes: a housing, where a chamber is defined in the housing; an electrode core, where the electrode core is arranged in the chamber, the electrode core includes a first electrode tab and a second electrode tab, one of the first electrode tab and the second electrode tab is a positive electrode tab, the other one of the first electrode tab and the second electrode tab is a negative electrode tab, the positive electrode tab is physically and electrically connected to the housing, and each of an end of the first electrode tab and/or an end of the second electrode tab away from the electrode core includes multiple connection pieces spaced apart; a first electrode terminal, where the first electrode terminal is electrically connected to the first electrode tab; and a second electrode terminal, where the second electrode terminal is electrically connected to the second electrode tab.

In an embodiment of the present disclosure, the electrode core has a long axis and a short axis, the first electrode tab is arranged along the long axis or the short axis, and the second electrode tab is arranged along the long axis or the short axis.

In an embodiment of the present disclosure, the electrode core has two long axes opposite to each other and two short axes opposite to each other, the first electrode tab is arranged along one of the long axes, the second electrode tab is arranged along the other long axis, one of the first electrode terminal and the second electrode terminal is a positive electrode terminal, the other one of the first electrode terminal and the second electrode terminal is a negative electrode terminal, and both the positive electrode terminal and the negative electrode terminal are arranged along one of the short axes.

In an embodiment of the present disclosure, the battery unit further includes: a positive lead-out sheet. The positive lead-out sheet is separately physically and electrically connected to the positive electrode tab and the positive electrode terminal.

In an embodiment of the present disclosure, the positive electrode tab is a bent member having an opening groove, and the battery unit further includes: a first insulation side plate. The first insulation side plate is arranged in the opening groove, so that at least a part of the positive electrode tab is located between the first insulation side plate and the positive lead-out sheet.

In an embodiment of the present disclosure, the first insulation side plate is connected to the electrode core through an adhesive layer.

In an embodiment of the present disclosure, the battery unit further includes: an aluminum cover plate. The aluminum cover plate is arranged on the electrode terminal cover plate and is electrically connected to the housing, an end of the positive lead-out sheet is connected to the aluminum cover plate, and the aluminum cover plate is electrically connected to the positive electrode terminal.

In an embodiment of the present disclosure, the battery unit further includes: an aluminum cover plate. The aluminum cover plate is arranged on the electrode terminal cover plate and is electrically connected to the housing, an end of the positive lead-out sheet is connected to the aluminum cover plate, and the aluminum cover plate is electrically connected to the positive electrode terminal.

In an embodiment of the present disclosure, the positive lead-out sheet extends in a direction of the long axis.

In an embodiment of the present disclosure, the battery unit further includes: a negative lead-out sheet. The negative lead-out sheet is separately physically and electrically connected to the negative electrode tab and the negative electrode terminal.

In an embodiment of the present disclosure, the negative electrode tab is a bent member having an opening groove, and the battery unit further includes: a second insulation side plate, where the second insulation side plate is arranged in the opening groove, so that at least a part of the negative electrode tab is located between the second insulation side plate and the negative lead-out sheet; and a third insulation side plate, where the third insulation side plate is arranged along one of the short axes and is located between the negative lead-out sheet and the electrode core, so that the negative lead-out sheet is insulated from the electrode core.

In an embodiment of the present disclosure, the negative lead-out sheet includes: a first sheet body, where the first sheet body extends in the direction of the long axis and is connected to the negative electrode tab; and a second sheet body, where the second sheet body extends in a direction of the short axis, and the second sheet body is separately connected to the first sheet body, the third insulation side plate, and the negative electrode terminal.

In an embodiment of the present disclosure, the multiple connection pieces are spaced apart in the extension direction of the long axis.

In an embodiment of the present disclosure, the multiple connection pieces are connected in series.

In an embodiment of the present disclosure, the battery unit further includes: an explosion-proof valve cover plate. The explosion-proof valve cover plate is arranged along the short axis, and the explosion-proof valve cover plate and the electrode terminal cover plate are located on two sides of the long axis.

In an embodiment of the present disclosure, a size of the long axis is greater than a size of the short axis.

According to another objective of the present disclosure, a battery module is provided, and includes the battery unit in any one of the foregoing embodiments.

According to still another objective of the present disclosure, a vehicle is provided, and includes the battery module in any one of the foregoing embodiments.

Other features and advantages of the present disclosure will become more apparent from the following detailed description of the example embodiments of the present disclosure with reference to the accompanying drawings.

### BRIEF DESCRIPTION OF THE DRAWINGS

The accompanying drawings, which are incorporated in the specification and constitute a part of the specification, illustrate the embodiments of the present disclosure, and together with the description thereof, are used to explain the principle of the present disclosure.
FIG. 1 is a schematic diagram of a structure of a battery according to an embodiment of the present disclosure;
FIG. 2 is an exploded diagram of a battery according to an embodiment of the present disclosure;
FIG. 3 is a schematic diagram of a partial structure of an electrode core according to an embodiment of the present disclosure; and
FIG. 4 is a schematic diagram of a connection between a first electrode tab of an electrode core and a positive lead-out sheet according to an embodiment of the present disclosure.

### Reference numerals:

battery unit 100;
electrode core 10;
first electrode tab 11; first connection piece 111; first opening groove 112;
second electrode tab 12; second connection piece 121; second opening groove 122;
housing 20; chamber 21; lower piece 22; upper cover 23;
first insulation side plate 30;
electrode terminal cover plate 40;
first electrode terminal 41; second electrode terminal 42; aluminum cover plate 43;
explosion-proof valve cover plate 50;
second insulation side plate 60;
positive lead-out sheet 70;
third insulation side plate 80;
negative lead-out sheet 90; first sheet body 91; and second sheet body 92.

### DETAILED DESCRIPTION

Various example embodiments of the present disclosure will now be described in detail with reference to the accompanying drawings. It should be noted that the relative arrangements, numeric expressions, and values of the components and steps described in these embodiments are not construed as a limitation on the scope of the present disclosure unless otherwise specified.

The following descriptions of at least one example embodiment are merely illustrative and are not intended to limit the present disclosure and application or use thereof.

Techniques, methods, and devices known to a person of ordinary skill in the art may not be discussed in detail, but the techniques, methods, and devices shall be considered as a part of the specification where appropriate.

In all the examples illustrated and discussed herein, any specific value should be interpreted as merely an example instead of a limitation. Therefore, other examples of example embodiments may have different values.

It should be noted that similar reference numerals and letters represent similar items in the following accompanying drawings, and therefore, once an item is defined in one of the accompanying drawings, the item does not need to be further discussed in subsequent accompanying drawings.

An objective of the present disclosure is to provide a new technical solution of a battery unit, to resolve problems in the related art that a housing of a battery is prone to corrosion and impedance of the battery is large.

Another objective of the present disclosure is to provide a new technical solution of a battery module, which includes the foregoing battery unit.

Still another objective of the present disclosure is to provide a new technical solution of a vehicle, which includes the foregoing battery module.

According to embodiments of the present disclosure, a positive electrode tab is electrically connected to a housing, so that the housing is electrified to prevent the housing from being corroded. A first electrode tab and/or a second electrode tab include or includes multiple connection pieces, so that a current path can be optimized, and a direct current resistance of an electrode core can be reduced.

The following describes a battery unit 100 according to the embodiments of the present disclosure in detail with reference to the accompanying drawings.

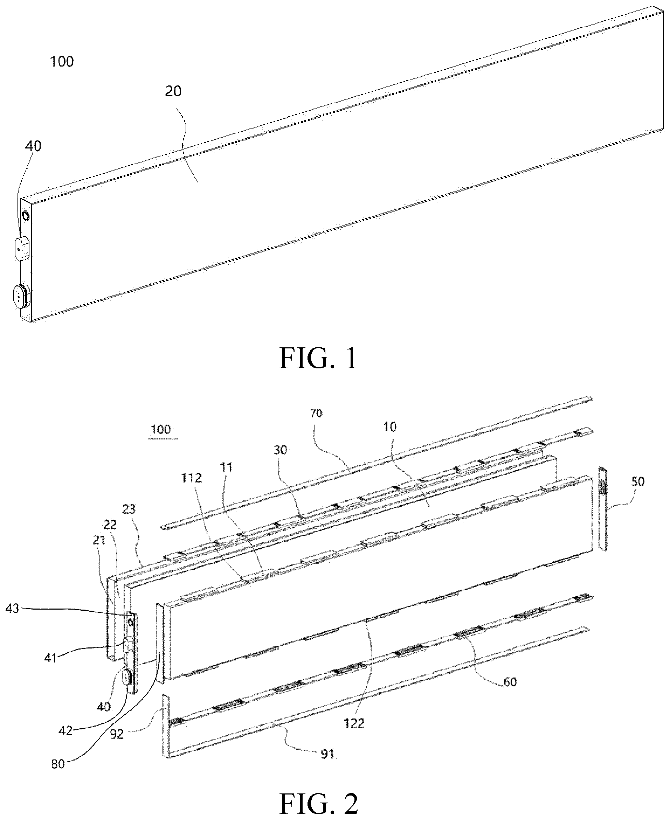

As shown in FIG. 1 to FIG. 4, the battery unit 100 according to the embodiments of the present disclosure includes a housing 20, an electrode core 10, a first electrode terminal 41, and a second electrode terminal 42.

Specifically, a chamber 21 is defined in the housing 20, the electrode core 10 is arranged in the chamber 21, the electrode core 10 includes at least one first electrode tab 11 and at least one second electrode tab 12, one of the first electrode tab 11 and the second electrode tab 12 is a positive electrode tab, the other one of the first electrode tab 11 and the second electrode tab 12 is a negative electrode tab, the positive electrode tab is electrically connected to the housing 20, and each of an end of the first electrode tab 11 and/or an end of the second electrode tab 12 away from the electrode core 10 includes multiple connection pieces spaced apart. The first electrode terminal 41 is electrically connected to the first electrode tab 11, and the second electrode terminal 42 is electrically connected to the second electrode tab 12.

In other words, the battery unit 100 according to the embodiments of the present disclosure mainly includes the housing 20, the electrode core 10, the first electrode terminal 41, and the second electrode terminal 42. The chamber 21 is formed in the housing 20, and the chamber 21 has an accommodating function. The electrode core 10 is installed in the chamber 21. The electrode core 10 has the first electrode tab 11 and the second electrode tab 12. A polarity of the first electrode tab 11 is opposite to that of the second electrode tab 12. When the first electrode tab 11 is a positive electrode tab, the second electrode tab 12 is a negative electrode tab. When the first electrode tab 11 is a negative electrode tab, the second electrode tab 12 is a positive electrode tab.

Electrically connecting the positive electrode tab to the housing 20 can enable a voltage of the housing 20 to be the same as a voltage of a positive electrode, which equivalently means that the housing 20 is positively electrified, so that the voltage increases. For example, if the housing 20 is an aluminum shell, a voltage of the aluminum shell increases, and lithium does not react with the high-voltage aluminum shell during a reaction. If the aluminum shell is not electrified or has a negative voltage, lithium ions are embedded into the aluminum shell to form an aluminum-lithium alloy, which corrodes the aluminum shell.

Each of an end of the first electrode tab 11 and/or the second electrode tab 12 away from the electrode core 10 includes multiple connection pieces spaced apart. In other words, at least one of the positive electrode tab and the negative electrode tab includes multiple connection pieces, and the multiple connection pieces are spaced apart. For ease of description, a connection piece corresponding to the first electrode tab 11 may be defined as a first connection piece 111, and a connection piece corresponding to the second electrode tab 12 may be defined as a second connection piece 121.

The electrode core 10 in the present disclosure may mainly include a first electrode plate, the first electrode tab 11, a second electrode plate, the second electrode tab 12, and a separator. The first electrode tab 11 is arranged on the first electrode plate, the second electrode tab 12 is arranged on the second electrode plate, and the separator is arranged between the first electrode plate and the second electrode plate.

When the end of the first electrode tab 11 or the second electrode tab 12 near the housing 20 and away from the electrode core 10 may include multiple connection pieces spaced apart, the following multiple cases are included. The following uses the first electrode tab 11 as an example for description.

### Case 1

A first end of the first electrode tab 11 is connected to the first electrode plate, a second end of the first electrode tab 11 has multiple first connection pieces 111, and a partition groove exists between two adjacent first connection pieces 111. In other words, the first end of the first electrode tab 11 is of an integral structure, and the second end of the first electrode tab 11 is of a partition structure.

### Case 2

The first electrode tab 11 is divided into multiple first connection pieces 111, two adjacent first connection pieces 111 are spaced apart, and an end of each first connection piece 111 is directly connected to the first electrode plate.

In both case 1 and case 2, compared with a first electrode tab 11 of an integral structure in the related art, the first electrode tab 11 in the present disclosure has a smaller direct current resistance (DCR), so that a DCR of the electrode core 10 can be reduced. Similarly, the second electrode tab 12 using multiple second connection pieces 121 can also reduce a DCR, and details are not described herein again. In addition, the polarity of the first electrode tab 11 is opposite to that of the second electrode tab 12. Regardless of whether the first electrode tab 11 is a positive electrode tab or a negative electrode tab, an end portion of the first electrode tab 11 away from the first electrode plate is divided into multiple connection pieces.

In addition, the battery unit 100 further includes the first electrode terminal 41 and the second electrode terminal 42. The first electrode terminal 41 is electrically connected to the first electrode tab 11, and the second electrode terminal 42 is electrically connected to the second electrode tab 12. This can achieve a coupling function. A positive electrode terminal is connected to the positive electrode tab, and a negative electrode terminal is connected to the negative electrode tab. The positive electrode terminal may be electrically connected to the positive electrode tab through the housing 20.

Therefore, according to the battery unit 100 in the embodiments of the present disclosure, the positive electrode tab is electrically connected to the housing 20, so that the housing 20 is electrified to prevent the housing 20 from being corroded. The first electrode tab 11 and/or the second electrode tab 12 include or includes multiple connection pieces, so that a current path can be optimized, and the direct current resistance of the electrode core 10 can be reduced.

According to the embodiments of the present disclosure, the electrode core 10 has the long axis and a short axis, the first electrode tab 11 is arranged along the long axis or the short axis, and the second electrode tab 12 is arranged along the long axis or the short axis. When the first electrode tab 11 is arranged along the long axis, the second electrode tab 12 may be arranged along the long axis or the short axis. When the first electrode tab 11 is arranged along the short axis, the second electrode tab 12 may be arranged along the long axis or the short axis. For example, the electrode core 10 is approximately a rectangle-like member, and has the long axis (that is, a long edge of the rectangle) and the short axis (that is, a short edge of the rectangle). The long axis extends in a first direction, and the short axis extends in a second direction. The first direction is nearly perpendicular to the second direction.

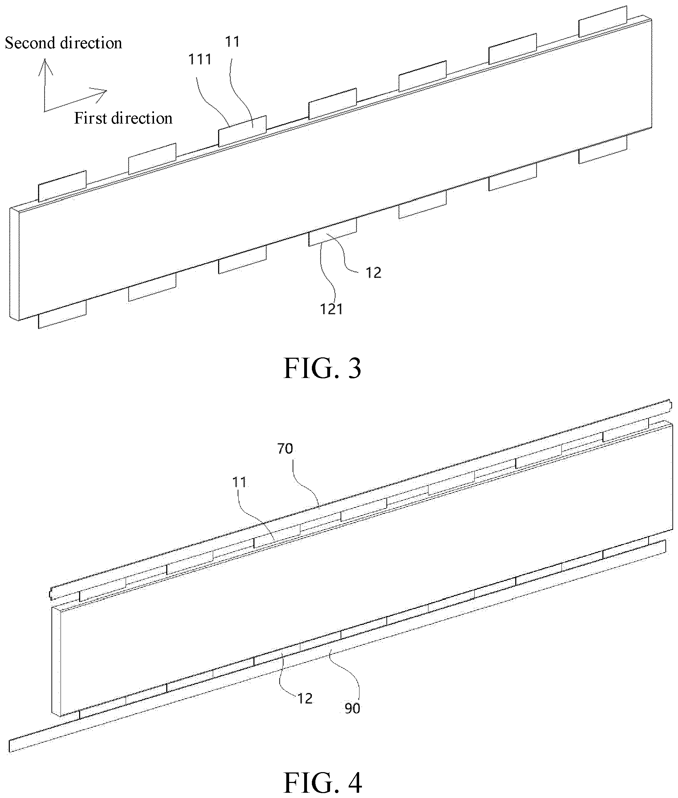

In some specific implementations of the present disclosure, as shown in FIG. 3, the electrode core 10 has two long axes opposite to each other and two short axes opposite to each other, the first electrode tab 11 is arranged along one of the long axes, the second electrode tab 12 is arranged along the other long axis, one of the first electrode terminal 41 and the second electrode terminal 42 is a positive electrode terminal, the other one of the first electrode terminal 41 and the second electrode terminal 42 is a negative electrode terminal, and both the positive electrode terminal and the negative electrode terminal are arranged along the short axis. In other words, the positive electrode tab and the negative electrode tab are separately arranged along the long axis and are located on two sides of the short axis, and the positive electrode tab and the negative electrode tab are arranged opposite to each other.

The positive electrode tab is arranged along the long axis, and a size of the long axis is greater than a size of the short axis. A requirement for reducing impedance of the electrode core 10 in the first direction is greater than a requirement for reducing impedance of the electrode core 10 in the second direction. Therefore, when the first electrode tab 11 is arranged along the long axis, an impedance reduction effect in the first direction can be ensured. In addition, due to a limited size of the short axis, especially for a blade battery, it is convenient to arrange the first electrode tab 11 in the direction of the long axis. In other words, designing multiple connection pieces on a side surface of the electrode core 10 in a length direction helps reduce a resistance of the entire electrode core 10, especially for a long blade battery. Similarly, the negative electrode tab is also arranged along the long axis, and the negative electrode tab includes multiple connection pieces, so that an impedance reduction effect can be further improved.

In a solution in the related art in which a positive electrode tab and a negative electrode tab are respectively arranged along two short axes opposite to each other, a current is conducted from a positive cover plate in the related art to an electrode terminal cover plate 40 through an entire aluminum shell, and in this case, a DCR includes a resistance of the aluminum shell. However, a current of the positive electrode in the present disclosure reaches the positive electrode terminal from a side surface, so that a DCR of the aluminum shell can be reduced.

According to the embodiments of the present disclosure, as shown in FIG. 4, the battery unit 100 further includes a positive lead-out sheet 70, and the positive lead-out sheet 70 is separately physically and electrically connected to the positive electrode tab and the positive electrode terminal. For example, a first end of the positive lead-out sheet 70 is connected to a connection piece of the positive electrode tab, and a second end of the positive lead-out sheet 70 is connected to the positive electrode terminal. In the embodiments, an electrical connection between the positive electrode tab and the positive electrode terminal can be implemented by using the positive lead-out sheet 70. The positive lead-out sheet 70 may be of an aluminum material, and the positive lead-out sheet 70 may be welded to the positive electrode tab.

According to the embodiments of the present disclosure, as shown in FIG. 2, the positive electrode tab is a bent member having a first opening groove 112, and the battery unit 100 further includes a first insulation side plate 30. The first insulation side plate 30 is arranged in the first opening groove 112, so that at least a part of the positive electrode tab is located between the first insulation side plate 30 and the positive lead-out sheet 70. In other words, during assembling of the battery unit 100, the positive electrode tab may be bent. In this case, the positive electrode tab is formed into a "U"-like shape, the "U" shape has a first opening groove 112, or the positive electrode tab is formed into a "7"-like shape, and the positive electrode tab engages with another component of the electrode core 10 to form a first opening groove 112.

In the embodiments, the first insulation side plate 30 is arranged in the positive electrode tab, so that the first insulation side plate 30 has a supporting function for the positive electrode tab after the positive electrode tab is folded. In other words, using the first insulation side plate 30 can prevent the positive electrode tab from being excessively squeezed by the positive lead-out sheet 70, so as to improve safety performance of the battery unit 100.

According to the embodiments of the present disclosure, the first insulation side plate 30 is connected to the electrode core 10 through an adhesive layer. In other words, the first insulation side plate 30 may be fastened to the electrode core 10 by using a tape, so that the electrode core 10 can be prevented from moving inside the battery unit 100.

In some specific implementations of the present disclosure, as shown in FIG. 2, the battery unit 100 further includes an electrode terminal cover plate 40. The electrode terminal cover plate 40 is arranged along the short axis, the positive electrode terminal and the negative electrode terminal are arranged on the electrode terminal cover plate 40, and the electrode terminal cover plate 40 is separately physically and electrically connected to the housing 20 and the positive lead-out sheet 70. In other words, both the positive electrode terminal and the negative electrode terminal are installed on the electrode terminal cover plate 40, which facilitates processing and production. In addition, the positive electrode tab is arranged on a side surface, and the positive electrode tab has a connection piece, and therefore, the current of the positive electrode directly reaches the electrode terminal cover plate 40 from the side surface, so that a DCR of the housing 20 is reduced.

According to the embodiments of the present disclosure, as shown in FIG. 4, the positive lead-out sheet 70 extends in the direction of the long axis, which not only helps the positive lead-out sheet 70 be connected to the positive electrode terminal to shorten a required length of the positive lead-out sheet 70, but also helps the positive lead-out sheet 70 be connected to the positive electrode tab that also extends along the long axis.

In some specific implementations of the present disclosure, the battery unit 100 further includes an aluminum cover plate 43. The aluminum cover plate 43 is arranged on the electrode terminal cover plate 40 and is electrically connected to the housing 20, the second end of the positive lead-out sheet 70 is connected to the aluminum cover plate 43, and the aluminum cover plate 43 is electrically connected to the positive electrode terminal. During production, the positive lead-out sheet 70 is welded to the positive electrode tab, and then is welded to the aluminum cover plate 43, to be in communication with the positive electrode terminal.

According to the embodiments of the present disclosure, as shown in FIG. 4, the battery unit 100 further includes a negative lead-out sheet 90, and the negative lead-out sheet 90 is separately physically and electrically connected to the negative electrode tab and the negative electrode terminal. In other words, a first end of the negative electrode tab may be connected to the negative electrode plate, and a second end of the negative electrode tab has multiple connection pieces. The multiple connection pieces are connected to the negative lead-out sheet 90, and the negative lead-out sheet 90 is connected to the negative electrode terminal, to implement an electrical connection between the negative electrode plate and the negative electrode terminal, in other words, implement communication of the negative lead-out sheet 90 with the negative electrode terminal. The negative lead-out sheet 90 may be of a copper material, and the negative lead-out sheet 90 may be welded to the negative electrode tab.

In some specific implementations of the present disclosure, as shown in FIG. 2, the negative electrode tab is a bent member having a second opening groove 122, and the battery unit 100 further includes a second insulation side plate 60. The second insulation side plate 60 is arranged in the second opening groove 122, so that at least a part of the negative electrode tab is located between the second insulation side plate 60 and the negative lead-out sheet 90, and the second insulation side plate 60 can have a supporting function to prevent the negative electrode tab from being excessively squeezed by the negative lead-out sheet 90.

According to the embodiments of the present disclosure, the second insulation side plate 60 is connected to the electrode core 10 through an adhesive layer. In other words, the second insulation side plate 60 may be fastened to the electrode core 10 by using a tape, so that the electrode core 10 can be prevented from moving inside the battery unit 100.

According to the embodiments of the present disclosure, as shown in FIG. 2, the battery unit 100 further includes a third insulation side plate 80. The third insulation side plate 80 is arranged along the short axis and is located between the negative lead-out sheet 90 and the electrode core 10, so that the negative lead-out sheet 90 is insulated from the electrode core 10, and short-circuiting can be avoided. The third insulation side plate 80 may be an insulation film, and the insulation film may be arranged in a length direction of the electrode core to achieve an insulation function for the negative lead-out sheet 90. The housing 20 may include a lower piece 22 and an upper cover 23, a groove is provided in the lower piece 22, and the lower piece 22 and the upper cover 23 engage with each other to form the chamber 21. After the insulation film is coated, the lower piece 22 may be embedded to complete welding of the lower piece 22 and the upper cover 23.

According to the embodiments of the present disclosure, a size of the electrode core 10 in the direction of the long axis is 700-800 mm, the size of the short axis is approximately 100 mm, and a size of the first connection piece 111 of the positive electrode tab in the direction of the long axis is 30-50 mm. A weld through which the first connection piece 111 is welded to the positive lead-out sheet 70 is kept at 26-46 mm. If the weld is excessively large, the weld is easily penetrated. A spacing between two adjacent first connection pieces 111 in the direction of the long axis is kept at 80-100 mm.

Similarly, a size of the second connection piece 121 of the negative electrode tab in the direction of the long axis is 30-50 mm. A weld through which the second connection piece 121 is welded to the negative lead-out sheet 90 is kept at 26-46 mm. A spacing between two adjacent second connection pieces 121 in the direction of the long axis is kept at 80-100 mm. A quantity of second connection pieces 121 may be adjusted based on a length of the battery.

According to the foregoing design, a positive electrode tab and a negative electrode tab can be led out from a side surface of a long blade battery, to optimize a current path and reduce an internal resistance of the battery.

In some specific implementations of the present disclosure, the positive electrode tab is welded to the positive lead-out sheet 70, the negative electrode tab is welded to the negative lead-out sheet 90, and a thickness of each of the positive lead-out sheet 70 and the negative lead-out sheet 90 may be kept at 1-2 mm. This thickness can reduce a deformation degree caused by welding while ensuring welding strength. The positive electrode tab conducts electricity to the positive electrode terminal through the positive lead-out sheet 70, and the negative electrode tab conducts electricity to the negative electrode terminal through the negative lead-out sheet 90, to form a current path.

According to the embodiments of the present disclosure, as shown in FIG. 2, the negative lead-out sheet 90 includes a first sheet body 91 and a second sheet body 92. The first sheet body 91 extends in the direction of the long axis and is connected to the negative electrode tab, the second sheet body 92 extends in the direction of the short axis, and the second sheet body 92 is separately connected to the first sheet body 91, the third insulation side plate 80, and the negative electrode terminal. The first sheet body 91 and the second sheet body 92 may be formed through bending. During production, the negative lead-out sheet 90 may be bent and welded to a lower surface of the electrode terminal cover plate 40 after the negative lead-out sheet 90 is welded to the negative electrode tab.

In the embodiments, the negative lead-out sheet 90 is divided into the first sheet body 91 and the second sheet body 92, so that the negative lead-out sheet 90 can be connected to both the negative electrode tab and the negative electrode terminal, without occupying excessively large space.

In some specific implementations of the present disclosure, as shown in FIG. 4, the multiple connection pieces are spaced apart in the extension direction of the long axis, which facilitates processing and production. When the electrode core 10 is applied to the battery unit 100, the multiple connection pieces are spaced apart in the first direction, which helps the positive lead-out sheet 70 be connected to the multiple connection pieces, helps install the first insulation side plate 30, and can further reduce impedance.

According to the embodiments of the present disclosure, the multiple connection pieces are connected in series. When the electrode core 10 is applied to the battery unit 100, the first electrode tab 11 may be connected to the housing 20 through the positive lead-out sheet 70, so that the housing 20 is electrified. In the embodiments, using multiple connection pieces connected in series helps the positive lead-out sheet 70 be electrically connected to the multiple first connection pieces 111. Similarly, the negative lead-out sheet 90 can be electrically connected to the multiple second connection pieces 121, and details are not described herein again.

According to the embodiments of the present disclosure, the battery unit 100 further includes an explosion-proof valve cover plate 50. The explosion-proof valve cover plate 50 is arranged along the short axis, and the explosion-proof valve cover plate 50 and the electrode terminal cover plate 40 are located on two sides of the long axis. The housing 20, the electrode terminal cover plate 40, and the explosion-proof valve cover plate 50 may be welded to form the sealed chamber 21.

The following describes the battery unit 100 according to the present disclosure in detail with reference to a specific embodiment.

The housing 20 includes the lower piece 22 and the upper cover 23. A shape of the housing 20 is the same as a shape of the electrode core 10, and the electrode core 10 is a rectangular member. The electrode core 10 has the long axis and the short axis. The long axis extends in a horizontal direction, and the short axis extends in a vertical direction. The positive electrode tab projects from an upper side surface of the electrode core 10, and the positive electrode tab has multiple first connection pieces 111, and the negative electrode tab projects from a lower side surface of the electrode core 10. The electrode terminal cover plate 40 is arranged on a left side surface of the lower piece 22, and the explosion-proof valve cover plate 50 is arranged on a right side surface of the lower piece 22. The positive electrode terminal and the negative electrode terminal are arranged on the electrode terminal cover plate 40, and the aluminum cover plate 43 is arranged on the electrode terminal cover plate 40.

After assembling of the battery unit 100 is completed, the second connection piece 121 is welded to the negative lead-out sheet 90, the first connection piece 111 is formed into a bent member, and an upper surface of the first connection piece 111 is welded to the positive lead-out sheet 70. A current path of the battery unit 100 may be positive electrode terminal->aluminum cover plate 43->positive lead-out sheet 70->positive electrode tab->positive electrode plate->negative electrode plate->negative electrode tab->negative lead-out sheet 90->negative electrode terminal.

In conclusion, the battery unit 100 according to the embodiments of the present disclosure has characteristics that the housing 20 is electrified and allows a current to pass through, and has effects of reducing the internal resistance of the battery and avoiding corrosion.

An embodiment of the present disclosure further provides a battery module. The battery module includes the battery unit 100 in any one of the foregoing embodiments. Because the battery unit 100 according to the embodiments of the present disclosure extends a service life of the housing 20 and reduces impedance of the battery, the battery module according to this embodiment of the present disclosure also has the foregoing advantage. Details are not described herein again.

An embodiment of the present disclosure further provides a vehicle. The vehicle includes the battery module in any one of the foregoing embodiments. Because the battery module according to the embodiments of the present disclosure extends a service life of the housing 20 and reduces impedance of the battery, the vehicle according to this embodiment of the present disclosure also has the foregoing advantage. Details are not described herein again.

Although some specific embodiments of the present disclosure have been described in detail by using examples, a person skilled in the art should understand that the foregoing examples are merely for description, and are not intended to limit the scope of the present disclosure. A person skilled in the art should understand that the foregoing embodiments may be modified without departing from the scope and spirit of the present disclosure. The scope of the present disclosure is limited by the appended claims.

## Claims

1. A battery unit (100), comprising:
a housing (20), a chamber (21) being defined in the housing (20);
an electrode core (10), the electrode core (10) being arranged in the chamber (21), the electrode core (10) comprising a first electrode tab (11) and a second electrode tab (12), one of the first electrode tab (11) and the second electrode tab (12) being a positive electrode tab, the other one of the first electrode tab (11) and the second electrode tab (12) being a negative electrode tab, the positive electrode tab being physically and electrically connected to the housing (20), and each of an end of the first electrode tab (11) and/or an end of the second electrode tab (12) away from the electrode core (10) comprising a plurality of connection pieces (111, 121) spaced apart;
a first electrode terminal (41), the first electrode terminal (41) being electrically connected to the first electrode tab (11); and
a second electrode terminal (42), the second electrode terminal (42) being electrically connected to the second electrode tab (12).

2. The battery unit (100) according to claim 1, wherein the electrode core (10) has a long axis and a short axis, the first electrode tab (11) is arranged along the long axis or the short axis, and the second electrode tab (12) is arranged along the long axis or the short axis.

3. The battery unit (100) according to claim 1 or 2, wherein the electrode core (10) has two long axes opposite to each other and two short axes opposite to each other, the first electrode tab (11) is arranged along one of the long axes, the second electrode tab (12) is arranged along the other long axis, one of the first electrode terminal (41) and the second electrode terminal (42) is a positive electrode terminal, the other one of the first electrode terminal (41) and the second electrode terminal (42) is a negative electrode terminal, and both the positive electrode terminal and the negative electrode terminal are arranged along one of the short axes.

4. The battery unit (100) according to any one of claims 1 to 3, further comprising:
a positive lead-out sheet (70), the positive lead-out sheet (70) being separately physically and electrically connected to the positive electrode tab and the positive electrode terminal.

5. The battery unit (100) according to any one of claims 1 to 4, wherein the positive electrode tab is a bent member having a first opening groove (112), and the battery unit (100) further comprising:
a first insulation side plate (30), the first insulation side plate (30) being arranged in the first opening groove (112), so that at least a part of the positive electrode tab is located between the first insulation side plate (30) and the positive lead-out sheet (70).

6. The battery unit (100) according to any one of claims 1 to 5, wherein the first insulation side plate (30) is connected to the electrode core (10) through an adhesive layer.

7. The battery unit (100) according to any one of claims 1 to 6, further comprising:
an electrode terminal cover plate (40), the electrode terminal cover plate (40) being arranged along one of the short axes, the positive electrode terminal and the negative electrode terminal being arranged on the electrode terminal cover plate (40), and the electrode terminal cover plate (40) being separately physically and electrically connected to the housing (20) and the positive lead-out sheet (70).

8. The battery unit (100) according to any one of claims 1 to 7, further comprising:
an aluminum cover plate (43), the aluminum cover plate (43) being arranged on the electrode terminal cover plate (40) and being electrically connected to the housing (20), an end of the positive lead-out sheet (70) being connected to the aluminum cover plate (43), and the aluminum cover plate (43) being electrically connected to the positive electrode terminal.

9. The battery unit (100) according to any one of claims 1 to 8, wherein the positive lead-out sheet (70) extends in a direction of the long axis.

10. The battery unit (100) according to any one of claims 1 to 9, further comprising:
a negative lead-out sheet (90), the negative lead-out sheet (90) being separately physically and electrically connected to the negative electrode tab and the negative electrode terminal.

11. The battery unit (100) according to any one of claims 1 to 10, wherein the negative electrode tab is a bent member having a second opening groove (122), and the battery unit (100) further comprising:
a second insulation side plate (60), the second insulation side plate (60) being arranged in the second opening groove (122), so that at least a part of the negative electrode tab is located between the second insulation side plate (60) and the negative lead-out sheet (90); and
a third insulation side plate (80), the third insulation side plate (80) being arranged along one of the short axes and being located between the negative lead-out sheet (90) and the electrode core (10), so that the negative lead-out sheet (90) is insulated from the electrode core (10).

12. The battery unit (100) according to claim 10 or 11, wherein the negative lead-out sheet (90) comprises:
a first sheet body (91), wherein the first sheet body (91) extends in the direction of the long axis and is connected to the negative electrode tab; and
a second sheet body (92), wherein the second sheet body (92) extends in a direction of the short axis, and the second sheet body (92) is separately connected to the first sheet body (91), the third insulation side plate (80), and the negative electrode terminal.

13. The battery unit (100) according to any one of claims 1 to 12, wherein the plurality of connection pieces (111, 121) are spaced apart in the extension direction of the long axis.

14. The battery unit (100) according to any one of claims 1 to 13, wherein the plurality of connection pieces (111, 121) are connected in series.

15. The battery unit (100) according to any one of claims 1 to 14, further comprising:
an explosion-proof valve cover plate (50), the explosion-proof valve cover plate (50) being arranged along the short axis, and the explosion-proof valve cover plate (50) and the electrode terminal cover plate (40) being located on two sides of the long axis.

16. The battery unit (100) according to any one of claims 1 to 15, wherein a size of the long axis is greater than a size of the short axis.

17. A battery module, comprising the battery unit (100) according to any one of claims 1 to 16.

18. A vehicle, comprising the battery module according to claim 17.
